Europäisches Patentamt

European Patent Office

Office européen des brevets

(19)

(11) **EP 1 194 382 B1**

(12) **FASCICULE DE BREVET EUROPEEN**

(45) Date de publication et mention
de la délivrance du brevet:
**09.03.2005 Bulletin 2005/10**

(21) Numéro de dépôt: **00922781.0**

(22) Date de dépôt: **28.04.2000**

(51) Int Cl.$^7$: **C02F 3/00**, C02F 3/04

(86) Numéro de dépôt international:
**PCT/FR2000/001139**

(87) Numéro de publication internationale:
**WO 2000/069779 (23.11.2000 Gazette 2000/47)**

(54) **PROCEDE, DISPOSITIF ET UTILISATION DU PROCEDE POUR L'ELIMINATION PAR VOIE BIOLOGIQUE D'ELEMENTS METALLIQUES PRESENTS A L'ETAT IONISE DANS LES EAUX**

VERFAHREN UND VORRICHTUNG ZUR BIOLOGISCHEN ENTFERNUNG VON METALLISCHEN ELEMENTEN, DIE ALS IONEN IN WASSER ENTHALTEN SIND

METHOD, DEVICE AND USE OF SAID METHOD FOR BIOLOGICAL ELIMINATION OF METAL ELEMENTS PRESENT IN AN IONIZED STATE IN WATER

(84) Etats contractants désignés:
**AT BE CH CY DE DK ES FI FR GB GR IE IT LI LU MC NL PT SE**

(30) Priorité: **12.05.1999 FR 9906058**

(43) Date de publication de la demande:
**10.04.2002 Bulletin 2002/15**

(73) Titulaire: **DEGREMONT**
**F-92500 Rueil-Malmaison (FR)**

(72) Inventeurs:
• **MOUCHET, Pierre**
**F-92500 Rueil Malmaison (FR)**

• **BERGEL, Jean-Yves**
**Ville Saint Laurent, PQ H4R 2V5 (CA)**

(74) Mandataire: **Debay, Yves**
**Cabinet Debay,**
**126 Elysée 2**
**78170 La Celle Saint Cloud (FR)**

(56) Documents cités:
EP-A- 0 695 720          DE-A- 1 767 738
DE-A- 4 111 375          DE-A- 4 231 363
DE-C- 19 640 899          FR-A- 2 470 094

## Description

La présente invention concerne un procédé permettant d'optimiser et de contrôler automatiquement les paramètres de l'élimination, par voie biologique, d'éléments métalliques présents à l'état ionisé dans les eaux, par exemple, souterraines ou superficielles, le dispositif de mise en oeuvre dudit procédé et l'utilisation du procédé.

L'invention concerne plus particulièrement un procédé et un dispositif d'élimination par voie biologique des éléments divalents, tels que le fer et le manganèse divalents, présents dans les eaux souterraines.

L'invention peut être étendue aux eaux superficielles dépourvues d'oxygène dissout où ces éléments sont présents dans le même état, comme l'eau de l'hypolimnion réducteur d'une retenue en état d'eutrophisation.

L'oxydation de minéraux par voie biologique a déjà fait l'objet d'études approfondies et d'applications concrètes. Cette famille de procédés utilise la capacité de certaines souches bactériennes spécifiques, indigènes et/ou incorporées, à catalyser par voie enzymatique les réactions d'oxydation exothermiques. En retour, ces réactions d'oxydation exothermiques procurent aux bactéries l'énergie nécessaire à leur développement. Cette famille de procédés est en particulier appliquée depuis de nombreuses années dans l'industrie minière :

- soit dans le domaine de l'hydrométallurgie extractive, dont les premières phases consistent en une pulvérisation du minerai, un enrichissement par flottation et une lixiviation en milieu acide ou alcalin ; la lixiviation biologique, ou "biolixiviation", y concurrence maintenant souvent la lixiviation purement chimique. Les applications les plus répandues ont concerné, jusqu'à ces dernières années, l'industrie du cuivre (voir l'ouvrage de N.N. HUGHES & R.K. POOLE : "Metals & Microorganisms", édité par Chapman & Hall, 1989 ; et l'article de D. MORIN : "Biotechnologies dans la métallurgie extractive", publié dans Les Techniques de l'Ingénieur, Paris, 1995, no. M2238, vol. 1) : le minerai, plus ou moins fractionné, est simplement entassé à l'air libre et arrosé d'une solution de principes nutritifs. Ce procédé, connu sous le nom de "lixiviation en tas", ne nécessite aucun contrôle précis en cours d'opération ;

- soit pour le traitement des effluents acides contenant de grandes quantités de fer divalent dissout. Le brevet japonais n° 44717/72 décrivait un procédé dans lequel une culture de bactéries du fer était réalisée dans un effluent traité, puis déversée dans l'effluent à traiter. Dans le brevet-japonais n° 38 981/72, on améliorait le procédé en réalisant la culture bactérienne 'in situ', sur des supports constitués d'oxydes de fer. Une amélioration supplémentaire était apportée par le brevet français n° 2.362.793, déposé en 1976, où la culture bactérienne était fixée sur un support insoluble, au pH de l'effluent, et où les ions ferreux ($Fe^{2+}$) étaient oxydés par insufflation d'air dans un réacteur agité. Les bactéries et leurs supports étaient ensuite séparés par décantation, puis recyclés dans le réacteur, comme dans un appareil de traitement d'eau résiduaire urbaine par le procédé de boues activées. Dans de tels cas également, la maîtrise du procédé ne pose pas de problème. En particulier, la faible valeur du pH du milieu évite toute compétition entre la voie physico-chimique et la voie biologique pour l'oxydation du fer, ce qui se traduit dans la pratique par l'absence d'obligation d'un contrôle de la quantité d'oxygène introduite et de la quantité d'oxygène résiduel dans l'eau après traitement.

Il a été ensuite envisagé d'appliquer ces phénomènes à l'élimination, par voie biologique, du fer et du manganèse présents à l'état dissout dans les eaux naturelles privées d'oxygène et dont le pH, contrairement aux effluents évoqués précédemment, est situé au voisinage de la neutralité, à environ plus ou moins une unité près. Dans ce domaine, même s'il s'agit d'espèces différentes de celles qui sont caractéristiques des effluents acides, il était déjà connu que des bactéries capables de catalyser l'oxydation du fer et/ou du manganèse, encore appelées ferro et mangano-bactéries, pouvaient, grâce à des enzymes et /ou des polymères exogènes, être détectées dans des environnements très divers (eaux souterraines, fonds des lacs, émergences de sources dans des baies marines, etc...). Les nuisances des ferro- ou mangano-bactéries en matière de colmatage de drains de puits ou de corrosion de canalisations métalliques étaient déjà bien connues, il restait à "domestiquer" ces bactéries pour les faire travailler utilement dans les stations d'élimination du fer et du manganèse dissouts.

Les premières observations à ce sujet ont été publiées par U. HÄSSELBARTH & D. LÜDEMANN (dans l'article "Die Biologische Enteisenung und Entmanganung", Vom Wasser, 1971, vol. 38, pp. 233-253 ; "Removal of iron and manganese from groundwater by microorganisms", Water Treatment & Examination, 1973, vol. 22, no. 1, pp. 62-77) et se sont concrétisées par le dépôt, par les mêmes auteurs, du brevet allemand n° 1.767.738. Ce brevet décrit un procédé de déferrisation biologique par oxygénation et filtration, dans des conditions telles que le pouvoir d'oxydoréduction du milieu présente une valeur de rH supérieure ou égale à 14,5 ± 0,5. Le rh est un indice analogue au pH, représentant quantativement la valeur du pouvoir oxydant ou réducteur d'un milieu: Cette valeur de rH correspond à la limite inférieure du domaine d'action des ferro-bactéries. Une condition minimale était ainsi définie, mais elle ne représentait qu'un seuil, d'ailleurs insuffisant, pour une déferrisation totale et elle ne permettait pas de définir des limites inférieure et supérieure sur lesquelles on aurait pu baser la régulation automatique du procédé.

Du reste, ces auteurs avaient défini, pour le procédé, des conditions d'oxygénation très limitées et très contraignantes, probablement parce qu'ils n'avaient pas eu des types d'eaux brutes variées à leur disposition. Le développement de ce procédé prometteur s'en est trouvé ralenti.

A peu près à la même époque, des études semblables avaient été entreprises en France (P. MOUCHET & J. MAGNIN : "Un cas complexe de déferrisation d'une eau souterraine", TSM-l'eau, 1979, vol. 74, no. 3, pp. 1 35-143), mais sur des eaux très différentes entre elles, ce qui a permis aux chercheurs français de définir plus précisément les limites du procédé de déferrisation biologique et d'annoncer déjà, au Congrès "Wasser Berlin' de 1985, la réalisation d'une trentaine d'installations basées sur ce principe de traitement biologique (voir l'article de P.MOUCHET et al. intitulé "Élimination du fer et du manganèse contenus dans les eaux souterraines ; problèmes classiques, progrès récents", publié dans Water Supply, 1985, vol. 3, no. 1, pp. 137-149). En même temps, du reste, les chercheurs allemands avaient constaté que de nombreuses stations pouvaient fonctionner spontanément sur ce principe (voir l'article de C. CZEKALLA et al. intitulé "Quantitative removal of iron and manganese by microorganisms in rapid sand filters (in situ investigations)", publié dans Water Supply, 1985, vol. 3, no. 1, pp. 111-123). Ce sont d'ailleurs de semblables observations qui avaient suscité les travaux français au début des années 70.

Ainsi, à la lecture de ce qui précède, on peut constater que la déferrisation biologique a été le procédé le plus étudié et le mieux connu au début de ces recherches, probablement parce que l'ensemencement naturel par les bactéries indigènes est relativement rapide. Bien au contraire, le temps d'ensemencement en matière de démanganisation biologique, qui demande plusieurs semaines, voire deux à trois mois, n'a pas favorisé les études sur la démanganisation, du moins dans un premier temps.

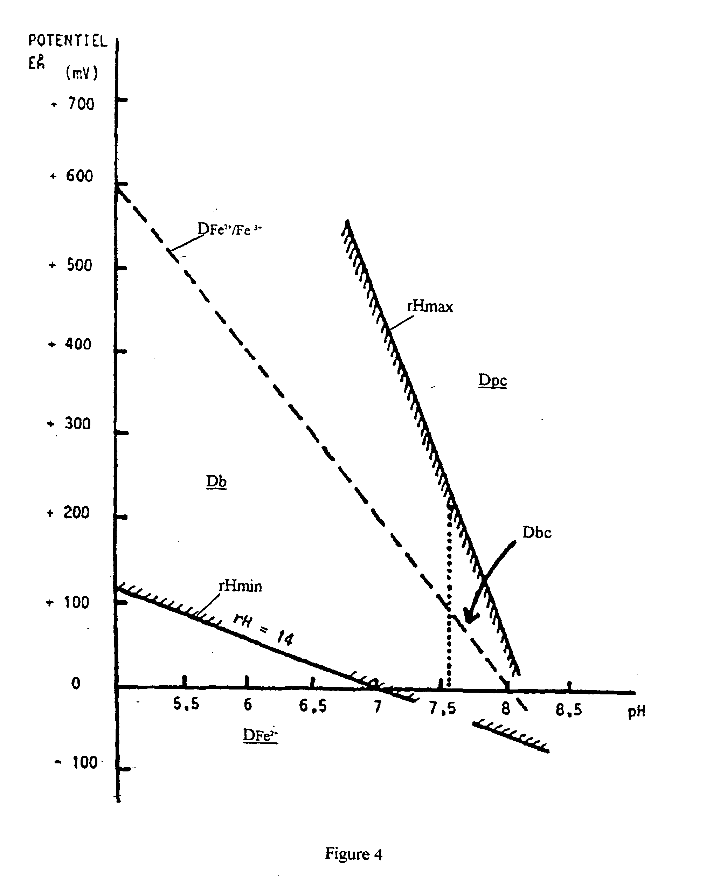

Les résultats des recherches françaises, publiés en 1985, précisaient entre autres le domaine d'activité des ferro-bactéries, tel que représenté à la figure 4, à l'intérieur duquel, du reste, le domaine d'existence d'un traitement assurant une élimination totale du fer est soumis à des limites plus restreintes.

Un tel diagramme, tracé avec pour ordonnée le potentiel d'oxydoréduction et pour abscisse le pH, est dénommé diagramme de stabilité. D'abord établi par M. J. POURBAIX pour l'étude des phénomènes de corrosion des métaux ferreux, il a été étendu à la spéciation des principaux éléments (voir l'ouvrage de M.J. POURBAIX intitulé "Atlas d'équilibres électrochimiques à 25°C", édité par Gauthier-Villars, Paris, 1963, pp. 307-321) et appliqué à l'étude de la déferrisation des eaux souterraines (voir l'article de J.D. HEM, intitulé "Stability field diagrams as aids in iron chemistry studies", publié dans le Journal AWWA, 1961, vol. 53, no. 2, pp. 211-232).

Le domaine de la déferrisation biologique (Db) ou d'activité de la ferro-bactérie est délimité par une valeur de rH minimum et une valeur de rH maximum, la zone comprise en dessous de la courbe (rHmin) représentant la valeur minimum de rH correspond au domaine ($DFe^{2+}$) de stabilité de l'ion ferreux et la zone comprise au-dessus de la courbe (rHmax) représentant la valeur de rH maximum correspond au domaine (Dpc) de la déferrisation physico-chimique. Le domaine optimal de la déferrisation biologique (Db) chevauche la limite théorique ($DFe^{2+}/Fe^{3+}$) séparant les domaines respectifs de l'ion ferreux et de l'hydroxyde ferrique.

Le diagramme de la figure 4 montre que la déferrisation biologique des eaux naturelles, dont le pH peut varier suivant le cas depuis des valeurs inférieures à 6 jusqu'à des valeurs supérieures à 8, ne peut se produire que dans certaines conditions de potentiel d'oxydoréduction et de pH pour lesquelles il y a oxydation enzymatique des ions ferreux $Fe^{2+}$ sans précipitation de sels basiques de fer ferrique $Fe^{3+}$, c'est-à-dire sans qu'il se produise de déferrisation physico-chimique dont les performances sont beaucoup plus modestes que celles de la déferrisation biologique.

Dans l'eau avant traitement, le potentiel d'oxydoréduction (ou Eh) varie en fonction de la concentration en oxygène dissout apporté par l'aération, alors que dans l'eau traitée, le Eh dépend davantage de la valeur du couple $Fe^{3+}/Fe^{2+}$, c'est-à-dire du degré d'oxydation du fer. D'après la figure 4, il apparaît clairement que les conditions d'oxydation doivent être d'autant plus contrôlées que le pH est élevé. En particulier, lorsque le pH est supérieur à 7,6 dans l'eau brute, la teneur en oxygène dissout doit être inférieure à un seuil maximum, très limité, la limite supérieure exacte étant d'autant plus faible que le pH est plus élevé. Cette valeur de pH comprise entre 7,6 et 8,5 définit un domaine (Dbc) où la déferrisation est difficilement réglable du fait de la compétition entre l'oxydation biologique et l'oxydation physico-chimique.

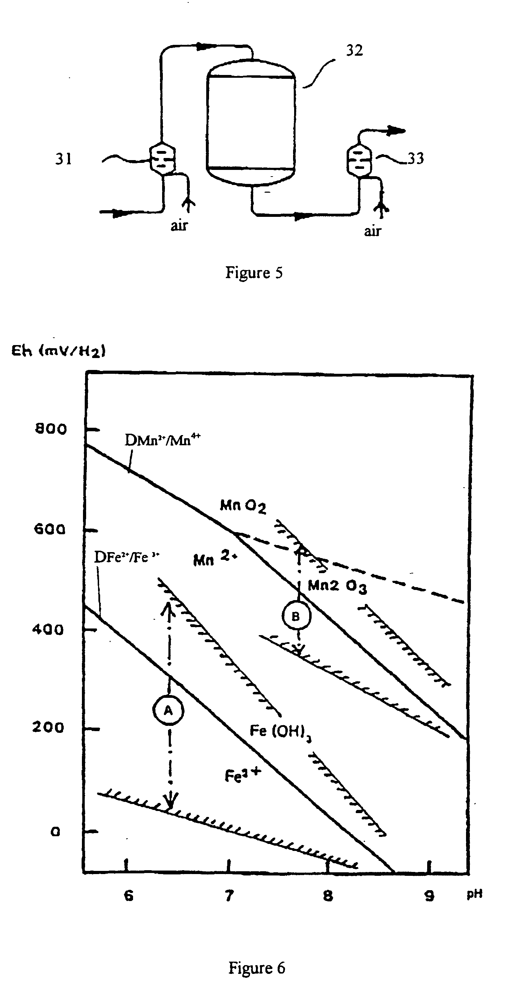

Dans la mesure où une teneur en oxygène dissout à une concentration supérieure à 50% de la saturation est néanmoins souhaitable dans l'eau traitée, pour éviter en particulier les fermentations et les corrosions en cours de distribution, ces observations ont conduit à la conception de stations de déferrisation biologique, pour toutes les eaux à pH> 7, suivant le schéma de la figure 5. Dans cette conception, l'eau brute subit une première aération réalisée dans un mélangeur (31 ) spécialement étudié pour obtenir un mélange immédiat de l'air et de l'eau. L'eau subit ensuite la déferrisation biologique par percolation à grande vitesse à travers un lit de matériau filtrant spécifique, support de ferro-bactéries dans un réacteur-biofiltre (32) spécialement étudié à cet effet. L'eau filtrée est ensuite soumise à une aération intensive finale dans un nouveau mélangeur (33). Le lit filtrant est réalisé en un matériau commercialisé sous la marque "Biolite® ".

La nécessité d'une parfaite maîtrise de la quantité d'oxygène injectée pour toutes les eaux à pH> 7,3 avait conduit au brevet français n° 2. 470. 094, déposé en 1979 par la demanderesse. Ce brevet décrit une invention conformément à laquelle l'oxygène était introduit dans l'eau à traiter par recyclage d'une partie de l'eau traitée. Cette eau traitée était préalablement amenée au voisinage de la saturation en oxygène dissout grâce à l'aération intensive finale, la quantité d'eau recyclée oxygénée était fonction du pH de l'eau à traiter et de sa demande en oxygène, et ajustée grâce à un rotamètre ou autre appareil de mesure de débit.

La poursuite des recherches en France a ensuite permis de fixer les limites du domaine de la démanganisation biologique et de les comparer avec celles de la déferrisation biologique. La figure 6 montre que les deux domaines sont distincts et qu'il n'y a pas de point commun entre la zone (A) d'élimination par voie biologique du fer, chevauchant la limite théorique $(DFe^{2+}/Fe^{3+})$ séparant les domaines respectifs de l'ion ferreux et de l'hydroxyde ferrique, et la zone (B) d'élimination par voie biologique du manganèse chevauchant la limite théorique $(DMn^{2+}/Mn^{4+})$ séparant les domaines respectifs de l'ion $Mn^{2+}$ et du dioxyde de manganèse $(MnO_2)$.

Il en résulte que pour les eaux contenant simultanément les deux éléments, la solution généralement adoptée est un traitement en deux étages de filtration, exposé dans l'article de P.Mouchet intitulé "From conventional to biological removal of iron and manganese in France", publié dans Journal AWWA, 1992, vol. 84, no 4, pp.158-167, un premier pour éliminer le fer et un second pour éliminer le manganèse, chaque étage recevant spécifiquement ses propres réglages d'injection d'oxygène et, éventuellement, d'ajustement du pH.

Ce point des connaissances représente l'état antérieur de l'art, avant la présente invention, dont il ressort clairement que pour une bonne conduite d'une installation de traitement d'élimination du fer et, éventuellement, du manganèse par voie biologique, les conditions environnantes dans le milieu de traitement doivent être ajustées continuellement, afin d'éviter toute inhibition de l'activité des bactéries. Ces conditions dépendent d'un certain nombre de paramètres, tels que le pH, le potentiel d'oxydoréduction, la température, les concentrations du substrat, de l'élément à oxyder, et de l'oxygène.

Tout défaut de réglage ou de fonctionnement des dispositifs d'apport d'oxygène et/ou de correction du pH, se traduit par un dysfonctionnement de l'unité de traitement avec comme résultat, une diminution de l'efficacité d'oxydation de l'élément à oxyder. Toutefois, l'élimination biologique présente, sur les traitements physico-chimiques conventionnels, de nombreux avantages :

- meilleure qualité d'eau traitée,

- compacités des stations de traitement,
- vitesse de traitement plus élevée,
- absence de réactifs (floculants, oxydants),
- pertes de charges réduites
- réduction notable des coûts d'investissement et d'exploitation,
- meilleur rendement de déshydratation des boues produites,

autant d'avantages significatifs qui étaient une réelle incitation à surmonter les défauts et dysfonctionnements ci-dessus mentionnés.

Dans le domaine de la déferrisation biologique, lesdits défauts et dysfonctionnements peuvent provenir :

- soit d'un défaut d'oxygène, qui limiterait les besoins en respiration de la biomasse, et placerait l'eau dans une plage de bas potentiel d'oxydoréduction ;

- soit d'un excès d'oxygène, qui placerait l'eau dans une plage de trop haut potentiel d'oxydoréduction, et inhiberait l'activité microbienne. Il peut même y avoir, dans ces conditions, création d'une compétition entre l'oxydation physico-chimique et l'activité bactérienne ;

- soit d'un pH acide trop bas (moins de 6 à 6,5) qui placerait l'eau sous le seuil minimum de potentiel d'oxydoréduction (Eh), requis pour que les microorganismes agissent dans le sens d'une oxydation totale de l'élément à éliminer.

- soit enfin d'un pH basique trop haut, (plus de 7,8 à 8) qui placerait l'eau au-dessus du seuil maximum de potentiel d'oxydoréduction, favorisant une compétition entre l'oxydation chimique de l'élément à oxyder, et l'activité bactérienne, pouvant aller même jusqu'à inhiber cette activité bactérienne.

La démanganisation biologique est en revanche moins sensible aux paramètres du milieu, mais il y a néanmoins intérêt à s'assurer en permanence, qu'avant d'entrer dans le réacteur de démanganisation, l'eau à traiter présente un pH suffisant (supérieur à 7,2 environ) et une teneur en oxygène dissout supérieure à 50-60% de la saturation pour se retrouver dans le domaine (B) défini à la figure 6. La maîtrise de ces traitements biologiques repose donc sur celle des paramètres physico-chimiques de fonctionnement, ce qui n'est pas aisé sur les petites stations et lorsque la teneur en oxygène $(O_2)$ dissout doit être très faible dans le procédé (parfois moins de 1,0 mg/l pour la déferrisation biologique des eaux dont le pH est supérieur à 7,5). La présente invention résout ce type de problèmes en fournissant une méthode de régulation du procédé en fonction des caractéristiques de l'eau brute.

On peut remarquer qu'une philosophie semblable des procédés biologiques a également vu le jour dans d'autres domaines, par exemple :

- en traitement anaérobie des eaux résiduaires (voir brevet FR 2 672 583 ou brevet US 5.248.423, déposé en 1992 par la demanderesse).

- en hydrométallurgie extractive, pour la biofiltration de métaux plus rares et plus précieux que le cuivre, comme 1'or (voir l'article de A. KONTOPOULOS & M. STEFANAKIS, intitulé "Process options for refractory sulfide gold ores : technical, environmental and economical aspects", 1991, 393 ; l'article de J. LIBAUDE intitulé "Le traitement des minerais d'or", publié dans la Recherche, 1994, mai) ou le cobalt ( voir l'article de D. MORIN et al. intitulé "Study of the bioleaching of a cobaltiferrous pyritic concentrate", publié dans IBS proceedings, 1993, vol. 1, p. 147 ; l'article de D. MORIN intitulé "Des bactéries vont extraire le cobalt", publié dans la Recherche, 1998, no. 312, pp. 38-40). Il est à noter que la gangue, dont ces métaux sont extraits, est souvent constituée principalement de pyrite, ce qui implique là encore une action majoritaire des ferro-bactéries adaptées aux milieux acides, déjà évoquées ci-avant à propos du traitement des effluents acides de mines.

L'invention décrite ici ne présente néanmoins aucun point commun avec les domaines ci-dessus, où par exemple la composition du gaz méthanifère intervient, sur le débit d'eau brute en traitement anaérobie d'effluent, ou bien un procédé de biolixiviation est contrôlé par l'hydraulique des réacteurs, l'introduction de souches bactériennes adaptées et /ou le réglage de la température.

Dans le cas présent, ce sont prioritairement les conditions d'oxydation de l'eau brute qui vont être ajustées automatiquement en fonction des caractéristiques de l'eau brute, de l'eau aérée avant traitement et /ou de l'eau traitée finale. Une première approche de cette régulation avait été tentée en se basant sur le potentiel Eh de l'eau traitée (voir l'article de C.TREMBLAY et al, intitulé "Control of biological iron removal from drinking water using ORP", publié dans IAWO, Vancouver, 1998, juin) à l'image de dispositifs semblables étudiés pour le traitement des eaux résiduaires (voir l'article de J. CHARPENTIER et al, intitulé "Oxidation-reduction potential (ORP) regulation : A way to optimize pollution removal and energy savings in the low load activated sludge process", publié dans Water Sci. Tech., 1987, vol. 19, no. 3-4, pp. 645-656 ; et l'article de D.G. WARCHAM et al, intitulé "Real-time control of wastewater treatment systems using ORP", publié dans Wat. Sci. Tech., 1993, vol. 28, no. 11-12. pp. 273-282). Les essais basés sur ce principe, effectués sous le contrôle de la demanderesse, se sont soldés par un échec.

En effet, dans une eau résiduaire traitée, le potentiel d'oxydo-réduction Eh final rend compte de la transformation des espèces carbonées, azotées, phosphorées, soufrées, etc.., dont une fraction seulement peut être éliminée de l'eau par strippage ou stockage dans les bactéries : une fraction de ces composés reste donc dissoute, sous forme partiellemenent réduite/partiellemnt oxydée, et le potentiel final dépend des proportions respectives des deux formes du système oxydo-réducteur.

Par contre, en matière de déferrisation-démanganisation, les formes réduites des métaux sont oxydées et précipitées, donc quasiment éliminées. de la matrice dissoute. Pour un pH donné, le potentiel d'oxydo-réduction Eh final est représentatif de cette élimination, qu'elle ait eu lieu par voie physico-chimique ou biologique. Il est en outre indépendant de la teneur en oxygène dissout, car le potentiel normal du couple $O_2/H_2O$ est très inférieur à celui du couple $Fe^{3+}/Fe^{2+}$. La mesure du Eh de l'eau traitée présente donc un intérêt certain comme paramètre indicateur de l'efficacité du traitement, ce qui a été d'ailleurs démontré par les auteurs précités, qui ont pu établir une relation significative entre cette valeur et la teneur en fer résiduel dans l'eau filtrée. En revanche, en aucun cas, cette mesure ne peut servir de base à la régulation du procédé.

Le but de la présente invention est de proposer un procédé permettant d'éviter de tels écueils et de réguler un traitement d'élimination par voie biologique d'éléments présents sous forme ionisée.

Ce but est atteint par le fait que le procédé pour l'élimination, par voie biologique, d'éléments métalliques présents à l'état ionisé dans les eaux dépourvues d'oxygène dissout, dans lequel l'eau à traiter est partiellement oxygénée par une aération spécifique réalisée avant percolation à travers un réacteur biofiltre comportant un lit de matériau filtrant support de bactéries, se caractérise en ce qu'il comprend :

- une étape de mesure d'au moins un paramètre constitué par le potentiel d'oxydoréduction (Eh) de l'eau aérée avant passage dans le biofiltre ;

- une étape de transmission des signaux de mesure à un calculateur et de comparaison du signal représentatif de la valeur d'au moins un paramètre mesuré à au moins une limite inférieure de ce paramètre déterminée en fonction de la mesure effectuée dans une seconde étape de mesure d'un second paramètre représentatif du pH de l'eau aérée avant passage dans le biofiltre et

- une étape éventuelle de correction du débit d'air par la commande d'un organe de régulation du débit d'air par un signal déterminé par le calculateur en fonction des deux étapes précédentes.

Selon une autre particularité, le procédé comprend une étape de mesure du second paramètre constitué par le pH de l'eau aérée avant passage dans le biofiltre, une étape de comparaison à une limite inférieure et supérieure du premier paramètre dont les limites inférieures et supérieures sont déterminées en fonction de la mesure du second paramètre.

Selon une autre particularité, le procédé comprend une étape de compensation d'un défaut de régulation du débit d'air par le premier paramètre au moyen d'un système de régulation complémentaire utilisant au moins un signal fourni par un moyen de mesure de la teneur résiduelle en oxygène dissous de l'eau traitée.

Selon une autre particularité, l'étape de compensation utilise un second signal fourni par un moyen de mesure du pH de l'eau traitée simultanément à celle de l'oxygène dissous.

Selon une autre particularité, le procédé comprend une étape de régulation du pH de l'eau filtrée par injection d'une solution alcaline dans l'eau à traiter, si le signal fourni par le moyen de mesure du pH et représentatif de la valeur du pH de l'eau traitée est inférieur à une valeur de consigne inférieure, ladite injection étant limitée par une valeur déterminée de consigne haute du pH.

Selon une autre particularité, le procédé comporte une étape de vérification de l'efficacité du traitement par une mesure en continu de la teneur en fer dissout résiduel et du potentiel d'oxydoréduction de l'eau filtrée, avec déclenchement d'une alarme en cas d'anomalie.

Un autre but de l'invention est de proposer un dispositif d'élimination d'éléments présents sous forme ionisée dans les eaux souterraines ou superficielles.

Ce but est atteint par le fait que le dispositif de traitement des eaux dépourvues d'oxygène dissout selon l'invention se caractérise en ce qu'il comporte une chambre d'aération dans laquelle sont amenés l'eau brute et l'air injecté dont le débit est contrôlé par une vanne permettant une aération ménagée sous pression et dont la sortie est reliée à un réacteur biofiltre, pourvu d'une sortie, garni d'un lit poreux support de ferro-bactéries à travers lequel percole l'eau à traiter, des premiers moyens de mesure du pH et des seconds moyens de mesure du potentiel d'oxydoréduction de l'eau aérée, disposés entre la chambre d'entrée et le filtre, des organes de calcul prenant en compte les signaux délivrés par les premiers et seconds moyens de mesure pour délivrer un signal de commande à un moyen de régulation du débit d'air agissant sur la vanne pour permettre la régulation en fonction d'une limite inférieure et supérieure de potentiel Eh, déterminées pour une valeur de pH donnée.

Selon une autre particularité, le dispositif comprend des moyens de mesure du pH et des moyens de mesure de l'oxygène dissous à la sortie du filtre et des organes de calcul et de régulation du débit d'air pour permettre la régulation complémentaire du procédé.

Selon une autre particularité, le dispositif comprend un poste de régulation du pH comportant un réservoir de solution alcaline commandé par une électrovanne ou une pompe doseuse qui est contrôlée par le signal élaboré par un organe de régulation et permettant la régulation du pH en fonction du signal délivré par le moyen de mesure du pH disposé en sortie du réacteur biofiltre à l'organe de régulation.

Selon une autre particularité, le dispositif comprend des moyens de mesure du potentiel d'oxydoréduction et du fer résiduel de l'eau filtrée, disposés à la sortie du filtre permettant l'évaluation de l'efficacité du dispositif.

Selon une autre particularité, la sortie du réacteur biofiltre à ferro-bactéries est reliée à l'entrée d'une seconde chambre d'aération dans laquelle est amenée l'eau traitée par le réacteur biofiltre à ferro-bactéries et de l'air injecté par une seconde vanne, la sortie de la chambre d'aération étant reliée à un second réacteur biofiltre pourvu d'une sortie et garni d'un lit poreux support de mangano-bactéries à travers lequel percole l'eau traitée issue du biofiltre à ferro-bactéries et des troisièmes moyens de mesure du potentiel d'oxydo-réduction en sortie de la seconde chambre d'aération, un organe de calcul prenant en compte le signal délivré par les troisièmes moyens de mesure pour délivrer un signal de commande à un moyen de régulation agissant sur la seconde vanne pour permettre la régulation du débit d'air en fonction d'une limite inférieure donnée.

Selon une autre particularité, le lit filtrant est constitué de sable siliceux d'une taille effective comprise entre 1 et 3 mm.

Selon une autre particularité, le lit filtrant est constitué d'un matériau filtrant appelé Biolite®, spécialement conçu pour ce type de traitement.

Un autre but de la présente invention est de proposer une utilisation dudit procédé.

Ce but est atteint par le fait que le procédé est utilisé dans un biofiltre à lit de matériau filtrant support de ferro-bactéries.

Selon une autre particularité, le procédé est utilisé dans un biofiltre à lit de matériau filtrant support de mangano-bactéries.

Selon une autre particularité, le procédé est utilisé dans un biofiltre à lit de matériau filtrant support de bactéries autotrophes.

Selon une autre particularité, le procédé est utilisé dans un premier biofiltre à lit de matériau filtrant support de ferro-bactéries, puis l'eau traitée sortant de ce premier biofiltre est utilisée dans un second biofiltre à lit de matériau filtrant support de mangano-bactéries.

D'autres particularités et avantages de la présente invention apparaîtront plus clairement à la lecture de la description ci-après faite en référence aux dessins annexés dans lesquels :

- la figure 1 représente de façon schématique un dispositif, selon l'invention, de déferrisation d'une eau souterraine ;

- la figure 2 représente un dispositif de déferrisation et de démanganisation d'une eau selon l'invention ;

- la figure 3 représente les résultats d'une déferrisation biologique selon l'invention en comparaison avec ceux obtenus selon une déferrisation physico-chimique ;

- la figure 4 représente un diagramme de stabilité de l'art antérieur illustrant le domaine d'activité des ferro-bactéries ;

- la figure 5 représente un dispositif de déferrisation biologique de l'art antérieur;

- la figure 6 représente les domaines de déferrisation et de démanganisation biologique définis par l'art antérieur.

L'invention va à présent être décrite en référence aux figures.

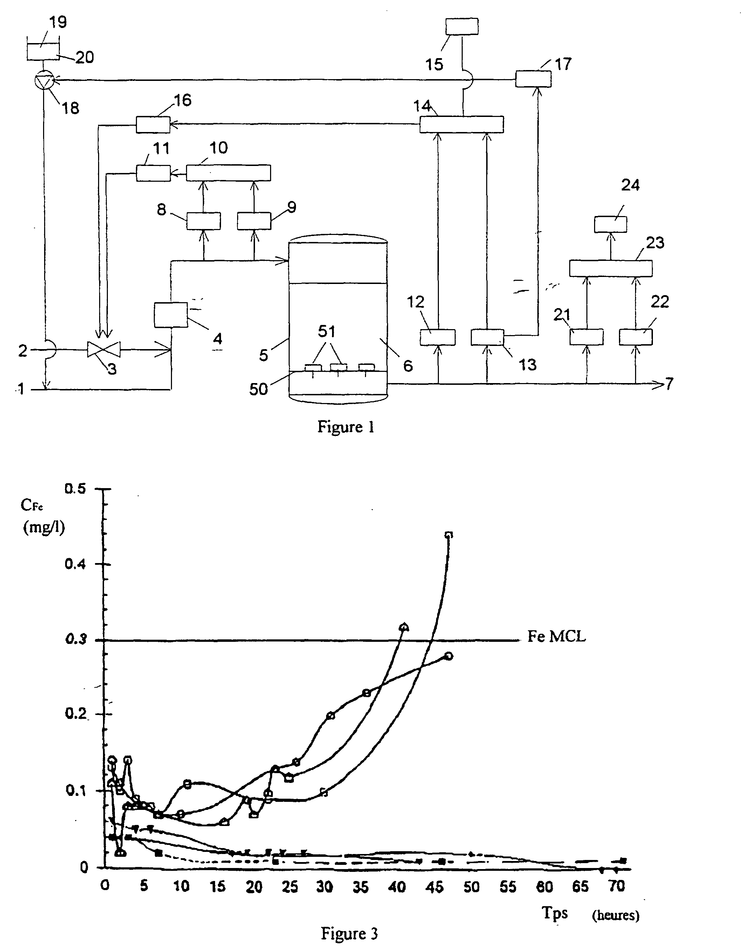

Le procédé consiste à mesurer les paramètres suivants : le pH et le potentiel d'oxydo-réduction, sur l'eau préalablement aérée, et éventuellement le pH et/ou l'oxygène dissout sur l'eau traitée par la biomasse. À partir de ces mesures et en temps réel, l'organe de contrôle agit sur différents mécanismes d'ajustement afin d'ajuster les conditions opératoires aux conditions les mieux adaptées pour le bon fonctionnement de l'écosystème situé dans le réacteur où se déroule la réaction biologique avec la biomasse. Ces organes de contrôle sont tels qu'indiqués sur la figure 1, qui n'est qu'une forme de réalisation d'un dispositif permettant la mise en oeuvre du procédé de l'invention, donnée à titre d'exemple, et détaillée dans ce qui suit.

L'eau brute, encore appelée l'eau à traiter, est amenée par une tuyauterie (1), sur laquelle est branchée une tuyauterie (2) d'injection d'air. Une vanne (3), automatique règle le débit de ce dernier; l'eau est instantanément mélangée intimement avec l'air introduit, en passant dans une chambre d'aération ou mélangeur (4), puis pénètre dans un réacteur-biofiltre (5), rempli d'un matériau filtrant spécifique (6), appelé lit filtrant, reposant sur un plancher (50) pourvu d'une pluralité de buselures (51). Le lit filtrant peut être constitué de sable siliceux d'une taille effective comprise entre 1 et 3 millimètres, ou de matériau poreux spécialement conçu pour la biofiltration, du type commercialisé sous la marque "Biolite". Après traitement, l'effluent sort du biofiltre (5) par la tuyauterie (7) d'eau traitée, branchée en dessous du plancher (50). Sur la tuyauterie (1) d'eau brute, en aval du mélangeur (4), un ensemble capteur-analyseur (8) constitue un premier moyen de mesure du pH de l'eau aérée, tandis qu'un appareil analogue (9) constitue un second moyen de mesure du potentiel d'oxydo-réduction (Eh) de l'eau aérée. Les signaux représentant les résultats des deux analyses sont transmis à un calculateur (10) qui vérifie que la valeur du potentiel Eh est bien comprise entre un minimum (limite inférieure) et un maximum (limite supérieure) qui sont déterminés en fonction de la valeur du pH de l'eau brute. Si tel n'est pas le cas, le calculateur (10) émet un signal à un régulateur (11) qui constitue l'ordre d'augmenter ou de diminuer le débit d'air délivré par la vanne (3) suivant que la valeur du potentiel Eh de l'eau aérée est au-dessous de la limite inférieure ou au-dessus de la limite supérieure, respectivement.

Ainsi, comme il a été précisé ci-dessus, le matériau filtrant spécifique est constitué soit par du sable, soit par un matériau du type "Biolite" de taille effective supérieure de l'ordre 1 à 3 mm, telle que par exemple de 1,25 mm, soit supérieure de 50% à la taille effective de 0,95 à 0,75 mm des mêmes filtres utilisés dans des conditions qui ne correspondent pas aux conditions de déferrisation ou démanganisation. De même, les buselures (51) du plancher des réacteurs biofiltres comporteront des fentes plus grosses de l'ordre de 0,7 à 1,2 mm alors que traditionnellement, les fentes ont une taille de 0,4 mm. La vitesse de filtration est de l'ordre de 30 à 50 m/seconde.

Enfin, l'oxygénation créée par la régulation va engendrer le développement de bactéries au sein du filtre, ces bactéries étant des ferro-bactéries ou des mangano-bactéries selon les conditions spécifiques d'aération créées en amont du filtre. La taille effective du lit filtrant et des fentes de buselures permet, compte tenu de la taille inférieure des bactéries, d'éviter l'obstruction du lit filtrant et des buselures et surtout de laver le lit - filtrant à l'eau brute, lorsque la vitesse de passage de l'eau dans le filtre dépasse la vitesse de filtration.

Une régulation fine, complémentaire de la régulation principale du procédé décrit ci-dessus, est assurée par des organes de contrôle situés en aval du biofiltre (5). La sortie (7) d'eau filtrée-est dotée d'un moyen de mesure (12) de l'oxygène dissout résiduel et d'un second moyen de mesure (13) du pH. Les signaux représentatifs des mesures sont envoyés à un organe de calcul ou un calculateur (14) qui vérifie que le signal représentatif de la teneur en oxygène dissout, pour la valeur du pH mesurée, n'est ni au-dessous d'un seuil inférieur donné, à cause de la consommation d'une partie de l'oxygène introduit en tête au cours de l'oxydation du fer, ni au-dessus d'un seuil supérieur donné, du fait d'un éventuel manque de précision dans la régulation du débit d'air par la mesure du potentiel Eh de l'eau aérée. Dans un premier temps, un dépassement de l'un des seuils détectés par le calculateur (14) peut déclencher une alarme (15) qui alerte l'opérateur pour l'inciter à vérifier la régulation en amont (par la valeur du potentiel Eh de l'eau aérée) et ajuster éventuellement les valeurs de consignes données au calculateur. Dans un deuxième temps, si une optimisation de la régulation en amont du biofiltre est impossible, celle-ci sera remplacée par une régulation en aval par l'oxygène dissout, réalisée par un signal émis par le calculateur (14) à un régulateur (16) qui envoie, suivant le cas, un signal d'ouverture ou de fermeture de la vanne (3) d'admission d'air pour revenir à l'intérieur des limites fixées.

En outre, il faut se souvenir que les réactions d'oxydation et de précipitation du fer libèrant des protons $H^+$, sont acidifiantes. Si le pouvoir-tampon de l'eau brute est faible, correspondant à une basse valeur de l'alcalinité, le pH risque de subir, au cours du procédé, une baisse incompatible avec un bon rendement du traitement. Le dispositif selon l'invention comprend un poste de régulation du pH permettant d'éviter cette baisse du pH. Pour remédier à cet inconvénient, le procédé selon l'invention prévoit de transmettre le résultat de la mesure du pH fourni par le second moyen de mesure (13) à un organe de régulation (17), qui déclenche, si le pH s'abaisse au-dessous d'un certain point de consigne (seuil inférieur), la mise en route progressive d'une électrovanne ou pompe doseuse (18) qui injecte dans la tuyauterie (1) une solution alcalinisante (19) contenue dans un bac de préparation ou réservoir (20), sans toutefois que le pH de l'eau puisse dépasser un point haut de consigne (seuil supérieur), comparé avec la mesure du pH procurée par le moyen de mesure (8) ou le moyen de mesure (13). Les seuils inférieur et supérieur de pH seront attribués en fonction de la nature des bactéries utilisées, chaque bactérie présentant une plage de pH préférentielle.

Les limites inférieures et supérieures attribuées respectivement au potentiel d'oxydoréduction Eh de l'eau aérée et à la concentration en oxygène dissout de l'eau traitée se déduisent d'algorithmes simples dont la variable indépendante est le pH de l'eau correspondante et qui sont mis en mémoire dans le calculateur ad hoc.

Les algorithmes utilisés correspondent :

- aux limites supérieures et inférieures du potentiel d'oxydo-réduction Eh de l'eau aérée, caractérisées par une équation de la forme

$$Eh = \alpha - \beta * pH$$

- aux limites supérieures et inférieures de la concentration en oxygène $[O_2]$ de l'eau traitée (pour un pH égal ou supérieur à 7), caractérisées par une équation de la forme

$$\log [O_2] = \gamma - \delta * pH$$

expression dans lesquelles les coefficients $\alpha$, $\beta$, $\gamma$, et $\delta$ sont déterminés au cas par cas pour chaque type d'eau.

Afin d'évaluer l'efficacité du traitement, la tuyauterie (7) d'eau traitée, en aval du biofiltre (5), peut être dotée d'un ensemble capteur-analyseur (21) mesurant le potentiel d'oxydoréduction Eh de l'eau traitée et d'un ensemble capteur-analyseur (22) mesurant sa teneur en fer résiduel. Ces ensembles sont connectés à un calculateur (23) qui peut déclencher une alarme (24) en cas d'anomalie. Ce mode de réalisation est donné à titre d'exemple non limitatif. Les différents calculateurs (10, 14, 23) cités précédemment peuvent former un seul composant pouvant intégrer les différents signaux émis par les capteurs (8, 9, 12, 13, 21, 22) et pouvant commander un régulateur unique de débit d'air. Ce composant pourra également comprendre le régulateur (17) de pH.

Dans ce qui précède l'application de l'invention telle qu'elle est décrite dans la figure 1 a surtout été évoquée à propos d'un traitement de déferrisation biologique. L'invention peut réguler tout autre traitement biologique basé sur une oxydation par l'air, en particulier une démanganisation biologique. Les algorithmes sont alors moins complexes, car il suffit de s'assurer que les paramètres physico-chimiques fondamentaux du procédé (potentiel, oxygène dissout, éventuellement rH) sont bien tous situés au-dessus d'un certain point de consigne, sans qu'il soit nécessaire de considérer une valeur supérieure limitante, quel que soit le paramètre considéré.

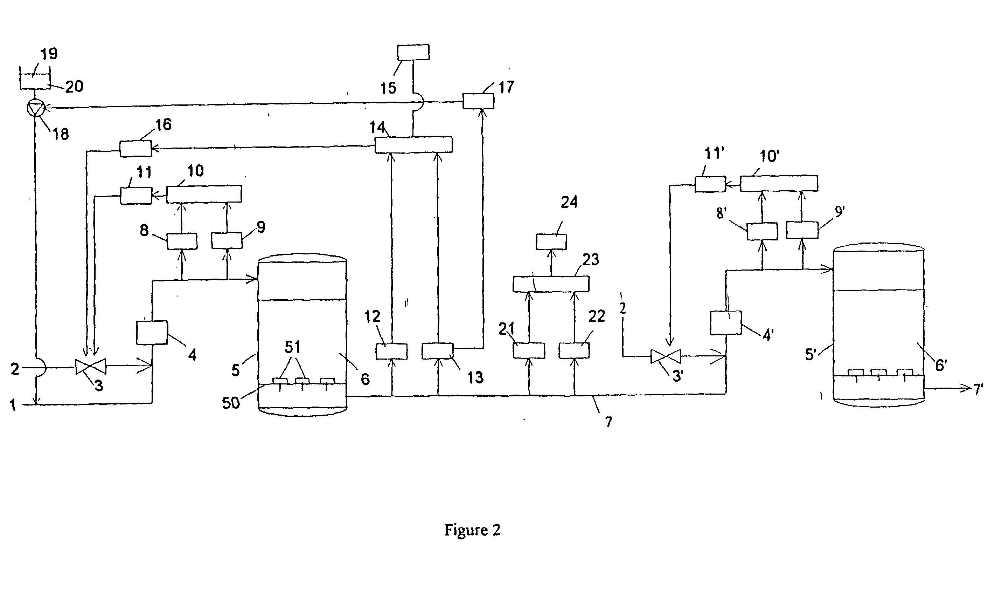

De même, dans une autre variante illustrée à la figure 2, il est possible de mettre en série un dispositif d'élimination du fer selon l'invention et, en aval, un dispositif d'élimination du manganèse. La sortie (7) du réacteur biofiltre à ferro-bactéries (5) est reliée directement ou indirectement à l'entrée d'une seconde (4') chambre d'aération dans laquelle est amenée l'eau traitée par le réacteur biofiltre à ferro-bactéries et de l'air (2) injecté par une seconde vanne (3'). L'eau est ensuite traitée par percolation à travers un second réacteur biofiltre (5') pourvu d'une sortie (7') et garni d'un lit poreux (6') support de magano-bactéries. Des troisièmes moyens de mesure (9') du potentiel d'oxydoréduction (Eh) ou de l'oxygène dissout et de mesure (8') du pH sont disposés en sortie de la seconde chambre d'aération. Les signaux représentatifs des mesures sont envoyés à un calculateur (10') qui compare le signal représentatif du potentiel mesuré à une limite inférieure donnée en fonction du signal représentatif de la mesure du pH. Si le potentiel mesuré se révèle inférieur à la limite inférieure, le calculateur (10') délivre un signal de commande à un moyen (11') de régulation agissant sur la seconde vanne (3') pour permettre la régulation du débit d'air. Il est à noter que le calculateur (10') peut utiliser la mesure du pH de l'eau traitée par le dispositif de déferrisation, effectué par le capteur (8) ou le second moyen de mesure(13) décrits précédemment. L'eau en sortie du réacteur biofiltre à ferro-bactéries peut éventuellement subir des traitements particuliers avant d'être traitée par le dispositif d'élimination du manganèse.

L'invention a été appliquée au traitement, sur station pilote, d'élimination du fer et du manganèse dans une eau souterraine. L'installation comportait deux étages de filtration fonctionnant selon le procédé selon l'invention, l'un régulé pour éliminer le fer et le second régulé pour éliminer le manganèse. Les résultats résumés dans le tableau ci-après, montrent la faible concentration de fer et de manganèse dans l'eau traitée par le procédé selon l'invention.

| PARAMÈTRES | EAU BRUTE | EAU TRAITÉE |
|---|---|---|
| pH | 7,0 | 7,8 |
| Fe (mg/l) | 13 | < 0,1 |
| Mn (mg/l) | 2 | < 0,04 |

La figure 3 représente l'évolution de la concentration en fer ferreux (CFe2+) d'une eau traitée sur différentes stations en fonction du temps (Tps) de traitement en heures. Les courbes ($\square, \bigcirc, \triangledown$) représentent les résultats obtenus sur une station de déferrisation existante, fonctionnant sur le principe entièrement physicochimique d'une oxydation au chlore, suivie d'une filtration sur sable vert manganisé (manganese greensand). Les courbes ($\blacklozenge, \bullet, \blacktriangle$) représentent les résultats obtenus sur une station pilote de déferrisation biologique, fonctionnant suivant l'invention, testée en parallèle. Les résultats, illustrés sur trois cycles de filtration parlent d'eux-mêmes et font ressortir tout l'intérêt de ce type de traitement biologique qui montre une constance de la faible concentration résiduelle en fer alors que par le procédé physico-chimique existant, celle-ci augmente avec les heures d'utilisation de la station.

De même, le procédé selon l'invention, sur un filtre d'élimination biologique du manganèse, a été testé sur une station fonctionnant à une vitesse de filtration de 30 m/h et le tableau ci-après récapitule les excellents résultats obtenus.

| PARAMÈTRES | EAU BRUTE | EAU TRAITÉE |
|---|---|---|
| pH | 7,65 | 7,65 |
| Mn (mg/l) | 0.7 | < 0,02 |

D'autres modifications à la portée de l'homme de métier font également partie de l'esprit de l'invention.

**Revendications**

1.	Procédé pour l'élimination, par voie biologique, d'éléments métalliques présents à l'état ionisé dans les eaux dépourvues d'oxygène dissout, dans lequel l'eau à traiter est partiellement oxygénée par une aération spécifique réalisée avant percolation à travers un réacteur biofiltre comportant un lit de matériau filtrant support de bactéries, **caractérisé en ce qu'**il comprend :

-	une étape de mesure d'au moins un paramètre constitué par le potentiel d'oxydoréduction (Eh) de l'eau aérée avant passage dans le biofiltre

-	une étape de transmission des signaux de mesure à un calculateur et de comparaison du signal représentatif de la valeur d'au moins un paramètre mesuré à au moins une limite inférieure de ce paramètre déterminée en fonction de la mesure effectuée dans une seconde étape de mesure d'un second paramètre représentatif du pH de l'eau aérée avant passage dans le biofiltre et

-	une étape éventuelle de correction du débit d'air par la commande d'un organe (3, 10, 11) de régulation du débit d'air par un signal déterminé par le calculateur en fonction des deux étapes précédentes.

2.	Procédé suivant la revendication 1, **caractérisé en ce qu'**il comprend en outre une étape de mesure du second paramètre constitué par le pH de l'eau aérée avant passage dans le biofiltre, une étape de comparaison à une limite inférieure et supérieure du premier paramètre dont les limites inférieures et supérieures sont déterminées en fonction de la mesure du second paramètre.

3.	Procédé suivant la revendication 1 ou 2, **caractérisé en ce qu'**il comprend une étape de compensation d'un défaut de régulation du débit d'air par le premier paramètre au moyen d'un système de régulation complémentaire utilisant au moins un signal fourni par un moyen de mesure (12) de la teneur résiduelle en oxygène dissout de l'eau traitée.

4.	Procédé suivant l'une des revendications précédentes, **caractérisé en ce que** l'étape de compensation utilise un second signal fourni par un moyen de mesure (13) du pH de l'eau traitée simultanément à celle de l'oxygène dissout.

5.	Procédé selon la revendication 2 ou 4, **caractérisé en ce qu'**il comprend une étape de régulation du pH de l'eau filtrée par injection d'une solution alcaline (19) dans l'eau à traiter, si le signal fourni par le moyen de mesure (13) du pH et représentatif de la valeur du pH de l'eau traitée est inférieur à une valeur de consigne inférieure, ladite injection étant limitée par une valeur déterminée de consigne haute du pH.

6.	Procédé suivant l'une des revendications précédentes, caractérisé en qu'il comporte une étape de vérification de l'efficacité du traitement par une mesure en continu de la teneur en fer dissout résiduel et du potentiel d'oxydoréduction de l'eau filtrée, avec déclenchement d'une alarme en cas d'anomalie.

7.	Utilisation du procédé selon la revendication 2, **ca-**

**ractérisée en ce que** le procédé est utilisé dans un biofiltre à lit de matériau filtrant support de ferrobactéries.

8. Utilisation du procédé selon la revendication 1, **caractérisée en ce que** le procédé est utilisé dans un biofiltre à lit de matériau filtrant support de mangano-bactéries.

9. Utilisation du procédé selon la revendication 1 ou 2, **caractérisée en ce que** le procédé est utilisé dans un biofiltre à lit de matériau filtrant support de bactéries autotrophes.

10. Utilisation du procédé selon la revendication 2, **caractérisée en ce que** le procédé est utilisé dans un premier biofiltre à lit de matériau filtrant support de ferro-bactéries, puis l'eau traitée sortant de ce premier biofiltre est utilisée selon le procédé de la revendication 1 dans un second biofiltre à lit de matériau filtrant support de mangano-bactéries.

11. Dispositif de traitement des eaux dépourvues d'oxygène dissout, **caractérisé en ce qu'**il comporte une chambre d'aération (4) dans laquelle sont amenés l'eau brute et l'air injecté dont le débit est contrôlé par une vanne (3) permettant une aération ménagée sous pression et dont la sortie est reliée à un réacteur biofiltre, pourvu d'une sortie (7), garni d'un lit poreux support de ferro-bactéries à travers lequel percole l'eau à traiter, des premiers moyens (8) de mesure du pH et des seconds moyens (9) de mesure du potentiel d'oxydoréduction (Eh) de l'eau aérée, disposés entre le la chambre d'aération et le filtre, des organes (10) de calcul prenant en compte les signaux délivrés par les premiers et seconds moyens de mesure pour délivrer un signal de commande à un moyen de régulation du débit d'air (11, 10) agissant sur la vanne (3) pour permettre la régulation en fonction d'une limite inférieure et supérieure de potentiel Eh, déterminées pour une valeur de pH donnée.

12. Dispositif selon la revendication 11, **caractérisé en ce qu'**il comprend des moyens (13) de mesure du pH et des moyens de mesure (12) de l'oxygène dissout à la sortie du filtre (5) et des organes de calcul (14) et de régulation (16) du débit d'air pour permettre la régulation complémentaire du procédé.

13. Dispositif selon la revendication 11 ou 12, **caractérisé en ce qu'**il comprend un poste de régulation du pH comportant un réservoir (20) de solution alcaline (19) commandé par une électrovanne ou une pompe doseuse qui est contrôlée par le signal élaboré par un organe de régulation (17) et permettant la régulation du pH en fonction du signal délivré par le moyen (13) de mesure du pH disposé en sortie du réacteur biofiltre à l'organe de régulation (17).

14. Dispositif selon l'une des revendications 11 à 13, **caractérisé en ce qu'**il comprend des moyens (21,22) de mesure du potentiel d'oxydoréduction et du fer résiduel de l'eau filtrée, disposés à la sortie du filtre permettant l'évaluation de l'efficacité du dispositif.

15. Dispositif de traitement des eaux dépourvues d'oxygène dissout selon une des revendications 11 à 14, **caractérisé en ce que** la sortie du réacteur biofiltre à ferro-bactéries est reliée à l'entrée d'une seconde (4') chambre d'aération dans laquelle est amenée l'eau traitée par le réacteur biofiltre à ferro-bactéries et de l'air injecté par une seconde vanne (3'), la sortie de la chambre d'aération (4') étant reliée à un second réacteur biofiltre (5') pourvu d'une sortie (7') et garni d'un lit poreux support de mangano-bactéries à travers lequel percole l'eau traitée issue du biofiltre à ferro-bactéries et des troisièmes moyens (9') de mesure du potentiel d'oxydo-réduction (Eh) en sortie de la seconde chambre d'aération, un organe de calcul (10') prenant en compte le signal délivré par les troisièmes moyens de mesure pour délivrer un signal de commande à un moyen (11') de régulation agissant sur la seconde vanne (3') pour permettre la régulation du débit d'air en fonction d'une limite inférieure donnée.

16. Dispositif selon l'une des revendications 11 à 15, **caractérisé en ce que** le lit filtrant est constitué de sable siliceux d'une taille effective comprise entre 1 et 3 mm.

17. Dispositif selon l'une des revendications 11 à 15, **caractérisé en ce que** le lit filtrant est constitué d'un matériau filtrant appelé "Biolite®", spécialement conçu pour ce type de traitement.

**Patentansprüche**

1. Verfahren zur biologischen Entfernung von Metallen, die als Ionen in Gewässern ohne gelösten Sauerstoff vorliegen, bei dem das zu behandelnde Wasser durch spezielle Luftzufuhr vor einer Perkolation durch einen Biofilterreaktor teilweise mit Sauerstoff angereichert wird, wobei der Biofilterreaktor ein Bett aus einem Filtermaterial umfaßt, das als Träger für Bakterien dient, **dadurch gekennzeichnet, daß** es umfaßt:

   - einen Schritt, bei dem mindestens ein aus dem Redox-Potential (Eh) des belüfteten Wassers bestehender Parameter, vor dem Durchlaufen des Biofilters gemessen wird;

- einen Schritt, bei dem die Meßsignale an einen Rechner übermittelt werden, und bei dem das Signal, das für den Wert des mindestens einen gemessenen Parameters charakteristisch ist, mit mindesten einer unteren Grenze dieses Parameters verglichen wird, die in Abhängigkeit der in einem zweiten Schritt durchgeführten Messung bestimmt wird, bei der ein zweiter, für den pH des belüfteten Wassers charakteristischer Parameter vor dem Durchlaufen des Biofilters gemessen wird, und

- gegebenenfalls einen Schritt, bei dem der Luftdurchsatz durch Steuern einer Einrichtung (3, 10, 11) korrigiert wird, die den Luftdurchsatz über ein Signal regelt, das von dem Rechner in Abhängigkeit von den zwei vorangehenden Schritten ermittelt wird.

2. Verfahren nach Anspruch 1, **dadurch gekennzeichnet, daß** es ferner einen Schritt, bei dem der zweite Parameter, der aus dem pH des belüfteten Wassers besteht, vor dem Durchlaufen des Biofilters gemessen wird, und einen Schritt umfaßt, bei dem mit einer unteren und einer oberen Grenze des ersten Parameters verglichen wird, wobei die untere und die obere Grenze in Abhängigkeit von der Messung des zweiten Parameters bestimmt werden.

3. Verfahren nach Anspruch 1 oder Anspruch 2, **dadurch gekennzeichnet, daß** es einen Schritt umfaßt, bei dem ein Fehler bei der Regelung des Luftdurchsatzes durch den ersten Parameter mittels einer zusätzlichen Regelanordnung kompensiert wird, die mindestens ein Signal verwendet, das von einem Mittel (12) geliefert wird, das den Restgehalt des im behandelten Wasser gelösten Sauerstoffs mißt.

4. Verfahren nach einem der vorhergehenden Ansprüche, **dadurch gekennzeichnet, daß** beim Kompensierungsschritt ein zweites Signal, das von einem Mittel (13) geliefert wird, das den pH des behandelten Wassers mißt, gleichzeitig mit dem Signal des gelösten Sauerstoffs verwendet wird.

5. Verfahren nach Anspruch 2 oder Anspruch 4, **dadurch gekennzeichnet, daß** es einen Schritt umfaßt, bei dem der pH des filtrierten Wassers durch Injektion einer alkalischen Lösung (19) in das zu behandelnde Wasser geregelt wird, wenn das vom Meßmittel (13) gelieferte Signal für den pH, das den pH-Wert für das behandelte Wasser charakterisiert, geringer als ein unterer Sollwert ist, wobei die Injektion durch einen oberen, vorbestimmten Sollwert des pH begrenzt ist.

6. Verfahren nach einem der vorhergehenden Ansprüche, **dadurch gekennzeichnet, daß** es einen Schritt umfaßt, bei dem die Wirksamkeit der Behandlung durch fortlaufende Messung des Restgehalts an gelöstem Eisen und des Redox-Potentials des filtrierten Wassers überprüft wird, wobei im Falle einer Abweichung ein Alarm ausgelöst wird.

7. Verwendung des Verfahrens gemäß Anspruch 2, **dadurch gekennzeichnet, daß** das Verfahren in einem Biofilter mit einem Bett aus Filtermaterial verwendet wird, auf das Eisenbakterien aufgebracht sind.

8. Verwendung des Verfahrens gemäß Anspruch 1, **dadurch gekennzeichnet**, **dadurch gekennzeichnet, daß** das Verfahren in einem Biofilter mit einem Bett aus Filtermaterial verwendet wird, auf das Manganbakterien aufgebracht sind.

9. Verwendung des Verfahrens gemäß Anspruch 1 oder Anspruch 2, **dadurch gekennzeichnet, daß** das Verfahren in einem Biofilter mit einem Bett aus Filtermaterial verwendet wird, auf das autotrophe Bakterien aufgebracht sind.

10. Verwendung des Verfahrens gemäß Anspruch 2, **dadurch gekennzeichnet, daß** das Verfahren in einem ersten Biofilter mit einem Bett aus Filtermaterial verwendet wird, auf das Eisenbakterien aufgebracht sind, und anschließend das behandelte Wasser, das diesen ersten Biofilter verläßt, entsprechend dem Verfahren gemäß Anspruch 1 in einem zweiten Biofilter mit einem Bett aus Filtermaterial verwendet wird, auf das Manganbakterien aufgebracht sind.

11. Anlage zur Behandlung von Gewässern ohne gelösten Sauerstoff, **dadurch gekennzeichnet, daß** sie umfaßt: eine Belüftungskammer (4), in die das Rohwasser und die eingeblasene Luft zugeführt werden, wobei der Luftdurchsatz durch ein Ventil (3) gesteuert wird, das eine vorgesehene Luftzufuhr unter Druck gestattet, und deren Ablauf mit einem Biofilterreaktor verbunden ist, der mit einem Ablauf (7) versehen und mit einem porösen Bett mit aufgebrachten Eisenbakterien ausgestattet ist, durch das das zu behandelnde Wasser perkoliert; erste Mittel (8) zum Messen des pH und zweite Mittel (9) zum Messen des Redox-Potentials (Eh) des belüfteten Wassers, die zwischen der Belüftungskammer und dem Filter angeordnet sind; Rechner (10), die die von den ersten und zweiten Meßmitteln gelieferten Signale verarbeiten, um ein Steuersignal an eine Einrichtung (10) abzugeben, die den Luftdurchsatz regelt und auf das Ventil (3) einwirkt, um die Regelung in Abhängigkeit von einer unteren und oberen Grenze des Potentials Eh zu gestatten, die durch einen gegebenen pH-Wert bestimmt sind.

12. Anlage nach Anspruch 11, **dadurch gekennzeichnet, daß** sie umfaßt: Mittel (13) zum Messen des pH und Mittel (12) zum Messen des gelösten Sauerstoffs am Ablauf des Filters (5) sowie Rechner (14) und Einheiten (16) zur Regelung des Luftdurchsatzes, um eine zusätzliche Regelung des Verfahrens zu gestatten.

13. Anlage nach Anspruch 11 oder Anspruch 12, **dadurch gekennzeichnet, daß** sie umfaßt: eine Stelle zur Regulierung des pH, die einen Vorratsbehälter (20) mit alkalischer Lösung (19) umfaßt, der durch ein Elektroventil oder eine Dosierpumpe gesteuert wird, das bzw. die durch das von einem Regelorgan (17) erzeugte Signal überwacht wird und die Regelung des pH in Abhängigkeit des Signals gestattet, das vom Mittel (13) geliefert wird, welches den pH mißt und am Ablauf des Biofilterreaktors an dem Regelorgan (17) angeordnet ist.

14. Anlage nach einem der Ansprüche 11 bis 13, **dadurch gekennzeichnet, daß** sie Mittel (21, 22) zum Messen des Redox-Potentials und des verbleibenden Eisens des gefilterten Wassers umfaßt, die am Ablauf des Filters angeordnet sind und eine Bewertung der Wirksamkeit der Anlage gestatten.

15. Anlage zur Behandlung von Gewässern ohne gelösten Sauerstoff nach einem der Ansprüche 11 bis 14, **dadurch gekennzeichnet, daß** der Ablauf des Biofilterreaktors mit Eisenbakterien mit dem Zulauf einer zweiten Belüftungskammer (4') verbunden ist, in die das durch den Biofilterreaktor mit Eisenbakterien behandelte Wasser und die durch ein zweites Ventil (3') eingeblasene Luft zugeführt werden, wobei der Ablauf der Belüftungskammer (4') mit einem zweiten Biofilterreaktor (5') verbunden ist, der mit einem Ablauf (7') versehen und mit einem porösen Bett mit aufgebrachten Manganbakterien ausgestattet ist, durch das das aus dem Biofilter mit Eisenbakterien stammende behandelte Wasser perkoliert und mit dritten Mitteln (9') zum Messen des Redox-Potentials (Eh) am Ablauf der zweiten Belüftungskammer, wobei ein Rechner (10') das von den dritten Meßmitteln gelieferte Signal verarbeitet, um ein Steuersignal an ein Regelmittel (11') abzugeben, das auf das zweite Ventil (3') einwirkt, um die Regelung des Luftdurchsatzes in Abhängigkeit von einer gegebenen unteren Grenze zu gestatten.

16. Anlage nach einem der Ansprüche 11 bis 15, **dadurch gekennzeichnet, daß** das Filterbett aus Quarzsand mit einer effektiven Teilchengröße zwischen 1 und 3 mm besteht.

17. Anlage nach einem der Ansprüche 11 bis 15, **da-**

**durch gekennzeichnet, daß** das Filterbett aus einem "Biolite®" genannten Filtermaterial besteht, das speziell für diese Art von Behandlung ausgelegt ist.

## Claims

1. Method for the elimination, by the biological route, of metallic elements present in the ionised state in water devoid of dissolved oxygen, in which the water to be treated is partly oxygenated by specific aeration carried out before percolation through a biofilter reactor comprising a bed of filtering material that is a support for bacteria, **characterised in that** it comprises:

   - a step of measuring at least one parameter constituted by the oxidation-reduction potential (Eh) of the aerated water before passage into the biofilter;

   - a step of transmitting measurement signals to a calculator and comparing the signal representing the value of at least one measured parameter at with least a lower limit of this parameter determined as a function of the measurement made in a second step of measuring a second parameter representing the pH of the aerated water before passage into the biofilter and

   - if necessary, a step of correcting the air flow by a command to a unit (3, 10, 11) for regulating air flow by a signal determined by the calculator as a function of the two preceding steps.

2. Method according to Claim 1, **characterised in that** it further comprises a step of measuring the second parameter constituted by the pH of the aerated water before passage into the biofilter, a step of comparing with a lower and upper limit of the first parameter, the lower and upper limits of which are determined as a function of the measurement of the second parameter.

3. Method according to Claim 1 or 2, **characterised in that** it comprises a step of compensating a fault in regulating the air flow by the first parameter by means of a supplementary regulation system using at least one signal supplied by a means (12) for measuring the residual content of oxygen dissolved in the treated water.

4. Method according to one of the preceding claims, **characterised in that** the compensation step uses a second signal supplied by a means (13) for measuring the pH of the treated water simultaneously with that of the dissolved oxygen.

5. Method according to Claim 2 or 4, **characterised in that** it comprises a step of regulating the pH of the filtered water by injecting an alkaline solution (19) into the water to be treated, if the signal supplied by the means (13) for measuring the pH and representing the pH value of the treated water is below a desired lower value, said injection being limited by a predetermined desired upper value for the pH.

6. Method according to one of the preceding claims, **characterised in that** it comprises a step for checking the effectiveness of the treatment by a continuous measurement of the content of residual dissolved iron and the oxidation-reduction potential of the filtered water, with an alarm being triggered in the event of anomaly.

7. Use of the method according to Claim 2, **characterised in that** the method is used in a biofilter with a bed of filtering material that is a support for ferro-bacteria.

8. Use of the method according to Claim 1, **characterised in that** the method is used in a biofilter with a bed of filtering material that is a support for mangano-bacteria.

9. Use of the method according to Claim 1 or 2, **characterised in that** the method is used in a biofilter with a bed of filtering material that is a support for autotrophic-bacteria.

10. Use of the method according to Claim 2, **characterised in that** the method is used in a first biofilter with a bed of filtering material that is a support for ferro-bacteria, then the treated water leaving this first biofilter is used according to the method of Claim 1 in a second biofilter with a bed of filtering material that is a support for mangano-bacteria.

11. Device for treating water devoid of dissolved oxygen, **characterised in that** it comprises an aeration chamber (4) into which raw water and injected air are brought, the flow of which is controlled by a valve (3) allowing controlled aeration under pressure, and the outlet from which is connected to a biofilter reactor, provided with an outlet (7), fitted with a porous bed that is a support for ferro-bacteria through which the water to be treated percolates, first means (8) for measuring the pH and second means (9) for measuring the oxidation-reduction potential (Eh) of the aerated water, arranged between the aeration chamber and the filter, calculating units (10) taking into account the signals delivered by the first and second measurement means in order to deliver a command signal to a means for regulating the air flow (11, 10) acting on the valve (3) in order to allow regulation as a function of a lower and upper limit for potential Eh, determined for a given pH value.

12. Device according to Claim 11, **characterised in that** it comprises means (13) for measuring the pH and means (12) for measuring the dissolved oxygen at the outlet from the filter (5) and units for calculating (14) and regulating (16) the air flow in order to allow supplementary regulation of the method.

13. Device according to Claim 11 or 12, **characterised in that** it comprises a station for regulating the pH comprising a reservoir (20) of alkaline solution (19) controlled by an electro-valve or a metering pump that is monitored by the signal prepared by a regulation unit (17) and allowing regulation of the pH as a function of the signal delivered by the means (13) for measuring the pH arranged at the outlet from the biofilter reactor to the regulation unit (17).

14. Device according to Claims 11 to 13, **characterised in that** it comprises means (21, 22) for measuring the oxidation-reduction potential and the residual iron in the filtered water, arranged at the outlet from the filter allowing evaluation of the effectiveness of the device.

15. Device for treating water devoid of dissolved oxygen according to one of Claims 11 to 14, **characterised in that** the outlet from the ferro-bacteria biofilter reactor is connected to the inlet of a second aeration chamber (4') into which is brought the water treated by the ferro-bacteria biofilter reactor and air injected by a second valve (3'), the outlet from the aeration chamber (4') being connected to a second biofilter reactor (5') provided with an outlet (7') and fitted with a porous bed that is a support for mangano-bacteria, through which the treated water from the ferro-bacteria biofilter percolates, and third means (9') for measuring the oxidation-reduction potential (Eh) at the outlet from the second aeration chamber, a calculation unit (10') taking into account the signal delivered by the third measurement means in order to send a command signal to a regulation means (11') acting on the second valve (3') in order to allow regulation of the air flow as a function of a given lower limit.

16. Device according to one of Claims 11 to 15, **characterised in that** the filtering bed is constituted by siliceous sand of an effective size comprised between 1 and 3 mm.

17. Device according to one of Claims 11 to 15, **characterised in that** the filtering bed is constituted by a filtering material called "Biolite® ", specially designed for this type of treatment.

Figure 1

Figure 3

Figure 2

Figure 4

Figure 5

Figure 6